# EUROPÄISCHE PATENTSCHRIFT

(11) **EP 1 816 019 B1**
(45) Veröffentlichungstag und Bekanntmachung des Hinweises auf die Patenterteilung: **18.11.2009**
(21) Anmeldenummer: 07001698.5
(22) Anmeldetag: 26.01.2007
(51) Int. Cl.: B60J 5/06, E05F 5/00, E05C 17/60

(54) **Feststell-Vorrichtung zur Rollenführung eines Rollenelementes**
Securing device for guiding the runners of a rolling element
Dispositif de fixation destiné au guidage des roues d'un élément roulant

(30) Priorität: 02.02.2006 DE 202006001600 U
(43) Veröffentlichungstag der Anmeldung: 08.08.2007
(73) Patentinhaber: Gebr. Bode GmbH & Co. KG, 34123 Kassel (DE)
(72) Erfinder: Gereke, Peter, 36266 Heringen (DE); König, Sergej, 34123 Kassel (DE)
(74) Vertreter: Bauer Vorberg Kayser Patentanwälte

(56) Entgegenhaltungen:
- EP-A- 0 877 138
- DE-A1- 10 347 324

## Beschreibung

Die Erfindung betrifft eine Feststell-Vorrichtung mit den Merkmalen aus dem Oberbegriff des Patentanspruchs 1. Eine solche Vorrichtung ist aus der DE 103 47 324 A bekannt.

Die Erfindung findet Einsatz an einem Kraftfahrzeug, insbesondere an einem PKW oder LKW, welches eine seitlich angeordnete Schiebetür aufweist. Die Schiebetür weist zumeist ein Rollenelement, insbesondere einen Rollenwagen auf, welches in einer feststehenden Führung am Fahrzeugrahmen läuft. Die Schiebetür wird in der Offen-Position durch eine Feststell-Vorrichtung festgehalten. Die Feststell-Vorrichtung muss hierbei im Regelfalle so dimensioniert sein, dass die von ihr erzeugte Festhaltekraft größer ist als die Kraft, welche vom Gewicht der Schiebetür erzeugt wird, wenn das Fahrzeug um einen vorgegebenen Winkel, insbesondere um 30 %, geneigt ist.
Bekannte Feststell-Vorrichtungen weisen neben einem Riegelelement ein Metallfederelement auf, durch dessen Federkraft die Schiebetür in der Offen-Position gehalten wird. Das Federelement kann als Blatt-oder Druckfeder ausgeführt sein.

Nachteilig an den bekannten Feststell-Vorrichtungen ist, dass stets mindestens zwei Bauteile (Metallfederelement und Riegelelement) benötigt werden, zudem benötigen sie einen großen Bauraum und sind verschleißanfällig.

Der Erfindung liegt die Aufgabe zu Grunde, eine Feststell-Vorrichtung kostengünstig so auszugestalten, dass bei verringertem Bauraum und einfacherer Bauweise eine ausreichend große Festhaltekraft erzeugt wird.

Die Lösung der Aufgabe erfolgt erfindungsgemäß mit den Merkmalen aus dem kennzeichnenden Teil des Patentanspruchs 1.

Vorteilhafte Weiterbildungen sind in den abhängigen Ansprüchen beschrieben.

Ein wesentliches Merkmal der Erfindung ist, dass die Feststell-Vorrichtung, insbesondere einstückig, aus Kunststoff gefertigt ist. Insbesondere hat sich das Material Polyoxymethylen (POM) als günstig erwiesen, da es in einem großen Temperaturbereich temperaturbeständig ist und eine gute Beständigkeit der Biegsamkeit aufweist.
Durch die Verwendung von Kunststoff ist es möglich, das Federelement und das Riegelelement in einem Bauteil zusammenzuführen. Somit ist die Bauweise einfacher und kostengünstiger, gleichzeitig wird der Bauraum verringert.
Die Festhaltekraft der Feststell-Vorrichtung wird durch die Kontur der biegsamen Feststell-Vorrichtung erreicht. Die Feststell-Vorrichtung weist aus diesem Grund einen Mittelabschnitt auf, welcher im Wesentlichen streifenförmig mit einer Aufwölbung ausgestaltet ist. Ein Endabschnitt der Feststell-Vorrichtung, der Ringtoch-Endabschnitt, weist ein Ringloch auf, der andere Endabschnitt, der Langloch-Endabschnitt, weist ein Langloch auf. Die Feststellvorrichtung kann mittels Bolzen über das Ringloch und das Langloch am Fahrzeugrahmen des Fahrzeuges derart angebracht werden, dass der Ringloch-Endab-schnitt nicht verschiebbar gelagert ist und der Langloch-Endabschnitt nur in Rollrichtung des Rollenelementes verschiebbar gelagert ist.

Wenn das Rollenelement der Schiebetür gegen diese Aufwölbung läuft, wirkt eine Kraft auf die Feststell-Vorrichtung, welche sowohl eine Komponente senkrecht zur Rollrichtung als auch eine Komponente parallel zur Rollrichtung aufweist. Weil die Feststell-Vorrichtung senkrecht zur Rollrichtung nicht verschiebbar ist und der Langloch-Endabschnitt in Rollrichtung verschiebbar ist, nicht aber der Ringloch-Endabschnitt, erfährt die flexible Feststell-Vorrichtung eine Formänderung, nämlich eine Längenänderung in Rollrichtung und eine Stauchung der Aufwölbung.
Während des Schließvorgangs der Schiebetür muss das Rollenelement in entgegengesetzter Richtung über die Feststell-Vorrichtung laufen. Dies geschieht allerdings nur, wenn die Kraft, welche auf das Rollenelement in Rollrichtung einwirkt, ausreicht, um die Feststell-Vorrichtung derart zu verformen, dass das Rollenelement über die Aufwölbung laufen kann. Die Feststell-Vorrichtung wirkt somit als Federelement mit einer Federkraft, durch welche die Schiebetür in der Offen-Position gehalten wird.

Die Feststell-Vorrichtung kann ferner derart dimensioniert sein, dass bei einer vorgegebenen Neigung des Fahrzeug, insbesondere bei einer Neigung um 30 %, die vom Gewicht der Schiebetür verursachte Kraft nicht ausreicht, um die Rolle des Rollenwagens über die Aufwölbung zu fahren.

Die Feststell-Vorrichtung kann über ein Montage-Element mit dem Fahrzeugrahmen verbunden werden.

Ein mögliches Ausführungsbeispiel der Erfindung ist in den Figuren 1 bis 4 dargestellt.

Es zeigen:
- Fig. 1: die Feststell-Vorrichtung in isometrischer Darstellung
- Fig. 2: die Feststell-Vorrichtung aus Fig. 1 montiert in einer Montage-Vorrichtung in isometrischer Darstellung
- Fig. 3: die Feststell-Vorrichtung aus Fig. 2 mit einem zusätzlichen Stopper-Element in isometrischer Darstellung
- Fig. 4: die Feststell-Vorrichtung aus Fig. 1 mit einem Rollenwagen in einer Seitenansicht

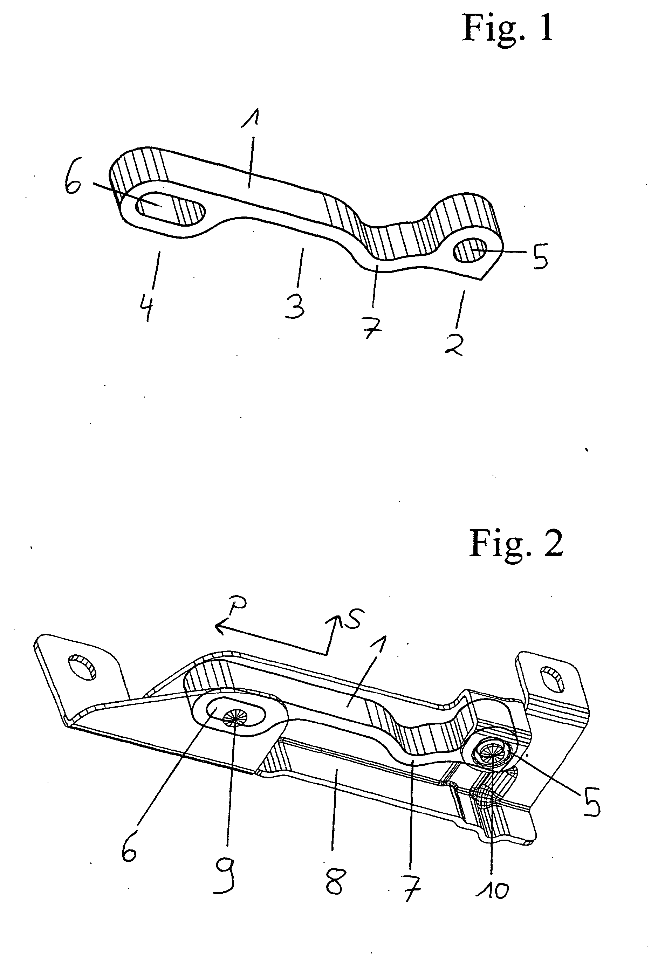

Die Figur 1 zeigt eine einstückig aus Kunststoff hergestellte Feststell-Vorrichtung 1, welche im Wesentlichen drei Abschnitte aufweist, nämlich einen Ringloch-Endabschnitt 2, einen Mittelabschnitt 3 und einen Langloch-Endabschnitt 4. Der Ringloch-Endabschnitt 2 weist ein Ringloch 5 auf und der Langloch-Endabschnitt 4 weist ein Langloch 6 auf. Der Mittelabschnitt 3 ist im Wesentlichen streifenförmig ausgebildet, wobei er eine Aufwölbung 7 aufweist.

In Figur 2 ist die Feststell-Vorrichtung 1 aus Figur 1 montiert in einer Montage-Vorrichtung 8 dargestellt. Über die Montage-Vorrichtung 8 wird die Feststell-Vorrichtung 1 in nicht dargestellter Weise an einem Fahrzeugrahmen befestigt. Die Feststell-Vorrichtung 1 wird mittels der Bolzen 9 und 10, welche durch das Langloch 6 und das Ringloch 5 geführt werden, mit der Montage-Vorrichtung 8 verbunden. Der Durchmesser des durch das Ringloch 5 geführten Bolzens 10 entspricht im Wesentlichen dem Durchmesser des Ringlochs 5, so dass der Ringloch-Endabschnitt 2 nicht verschiebbar in der Montage-Vorrichtung 8 gelagert ist. Der Durchmesser des durch das Langloch 6 geführten Bolzens 9 entspricht im Wesentlichen der Höhe des Langlochs 6, so dass der Langloch-Endabschnitt 2 nicht verschiebbar in Pfeilrichtung S, aber verschiebbar in Pfeilrichtung P in der Montage-Vorrichtung 8 gelagert ist.

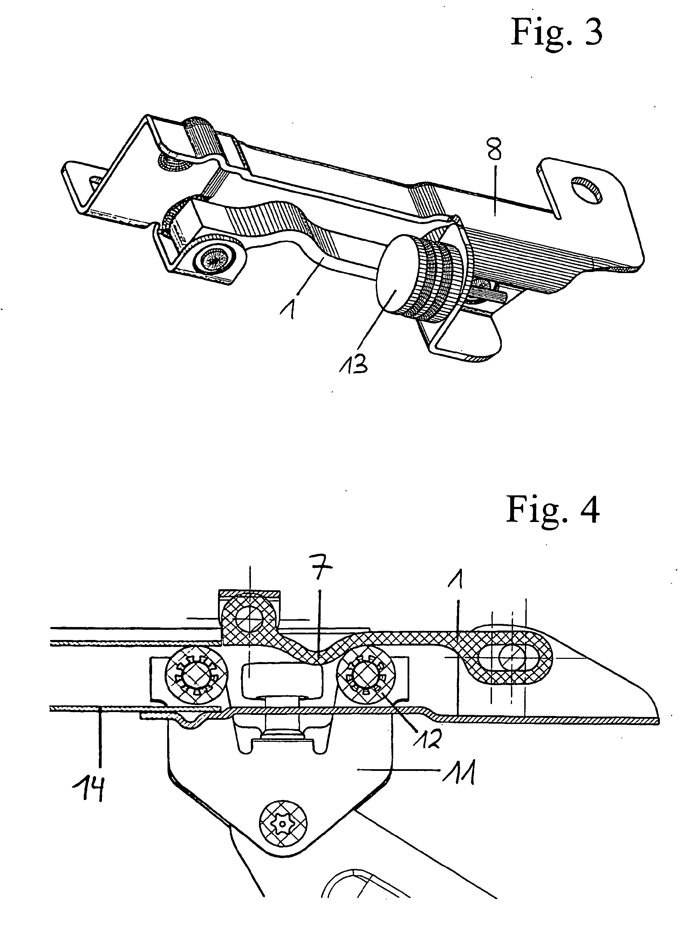

Die Figur 3 zeigt die Feststell-Vorrichtung 1 aus Fig. 2 mit einem zusätzlichen Stopper-Element 13. Das Stopper-Element 13 dient zum federnden Abstoppen der nicht dargestellten Schiebetür, insbesondere in dem Fall, in dem die Schiebetür mit großem Schwung geöffnet wird.

Die Figur 4 zeigt das Zusammenwirken der Feststellvorrichtung 1 mit einem Rollenwagen 11 einer nicht dargestellten Schiebetür. Der Rollenwagen 11 läuft in einer Führungsschiene 14 über die Kontur der Feststell-Vorrichtung 1. Der Rollenwagen 11 weist eine Rolle 12 auf, die während des Öffnungsvorgangs der Schiebetür gegen die Aufwölbung 7 läuft, so dass eine Kraft auf die Feststell-Vorrichtung 1 wirkt, welche sowohl eine Komponente senkrecht zur Rollrichtung als auch eine Komponente parallel zur Rollrichtung aufweist. Weil die Feststell-Vorrichtung 1 senkrecht zur Rollrichtung nicht verschiebbar ist und der Langloch-Endabschnitt 4 in Rollrichtung verschiebbar ist, nicht aber der Ringloch-Endabschnitt 2, erfährt die flexible Feststell-Vorrichtung eine Formänderung, nämlich eine Längenänderung in Rollrichtung und eine Stauchung der Aufwölbung 7 derart, dass die Rolle 12 über diese Aufwölbung läuft.
Während des Schließvorgangs der Schiebetür muss die Rolle 12 des Rollenwagens 11 in entgegengesetzter Richtung über die Feststell-Vorrichtung 1 laufen. Dies geschieht allerdings nur, wenn die Kraft, welche auf den Rollenwagen 11 in Rollrichtung einwirkt, ausreicht, um die Feststell-Vorrichtung 1 derart zu verformen, dass das Rollenelement über die Aufwölbung laufen kann. Die Feststell-Vorrichtung wirkt somit als Federelement mit einer Federkraft, durch welche die Schiebetür in der Offen-Position gehalten wird.

## Patentansprüche

1. Feststell-Vorrichtung (1) zur Rollenführung eines Rollenelementes, insbesondere eines Rollenwagens (11), einer seitlich an einem Kraftfahrzeug angebrachten Schiebetür und zum Feststellen der Schiebetür in der Offen-Position, wobei die Feststell-Vorrichtung (1) einen Mittelabschnitt (3) aufweist, welcher im Wesentlichen einer ebener Fläche mit einer Aufwölbung (7) aufweist, wobei sie einen ersten Endabschnitt (2) und einen zweiten Endabschnitt (4) aufweist, wobei sie Öffnungen (5,6) zur Durchführung von Verbindungsmitteln (8,9,10) aufweist, mittels derer sie am Fahrzeugrahmen des Fahrzeuges derart anbringbar ist, und wobei der erste Endabschnitt (2) nicht verschiebbar angeordnet ist
**dadurch gekennzeichnet,**
• **dass** die Feststell-Vorrichtung (1) aus Kunststoff gefertigt ist, und dass der zweite Endabschnitt (4) nur in Rollrichtung des Rollenelementes verschiebbar angeordnet ist, so dass die Feststell-Vorrichtung als Federelement mit einer Federkraft, durch welche die Schiebetür in der Offen-Position gehalten wird, wirkt.

2. Feststell-Vorrichtung (1) nach Anspruch 1, **dadurch gekennzeichnet, dass** der erste Endabschnitt als Öffnung ein Ringloch (5) und der zweite Endabschnitt (4) als Öffnung ein Langloch (6) aufweist.

3. Feststell-Vorrichtung (1) nach Anspruch 1 oder 2, **dadurch gekennzeichnet, dass** sie einstückig ausgeführt ist.

4. Feststell-Vorrichtung (1) nach einem der vorhergehenden Ansprüche, **dadurch gekennzeichnet, dass** sie aus Polyoxymethylen gefertigt ist.

5. Feststell-Vorrichtung (1) nach einem der vorhergehenden Ansprüche, **dadurch gekennzeichnet, dass** sie über eine Montage-Vorrichtung (8) an dem Fahrzeugrahmen anbringbar ist.

6. Feststell-Vorrichtung (1) nach einem der vorhergehenden Ansprüche, **dadurch gekennzeichnet, dass** der Mittelabschnitt (3) im Wesentlichen streifenförmig ausgebildet ist.

## Claims

1. A locking device (1) for guiding the rollers of a roller element, in particular of a roller carriage (11) of a sliding door laterally attached to a motor vehicle, and for locking said sliding door in the open position, said locking device (1) comprising a central portion (3) which substantially comprises a level surface with a bulge (7), said locking device comprising a first end portion (2) and a second end portion (4), said locking device comprising openings (5, 6) for passing connecting means (8, 9, 10) for attachment of said locking device to the vehicle frame therethrough, and said first end portion (2) being disposed so as not to be slidable,
**characterized in**
**that** said locking device (1) is made from plastic material and that said second end portion (4) is disposed so as to be only slidable in the rolling direction of the roller element so that said locking device (1) acts as a spring element with a spring force holding the sliding door in the open position.

2. The locking device (1) as set forth in claim 1, **characterized in that** the first end portion comprises a ring hole (5) as the opening and that the second end portion (4) comprises a long hole (6) as the opening.

3. The locking device (1) as set forth in claim 1 or 2, **characterized in that** it is made from one piece.

4. The locking device (1) as set forth in any one of the previous claims, **characterized in that** it is made from polyoxymethylene.

5. The locking device (1) as set forth in any one of the previous claims, **characterized in that** it can be attached to the vehicle frame via a mounting device (8).

6. The locking device (1) as set forth in any one of the previous claims, **characterized in that** the central portion (3) is configured to be substantially strip-shaped.

## Revendications

1. Dispositif de blocage (1) pour le guidage des galets d'un élément à galets, en particulier d'un chariot à galets (11), d'une porte coulissante montée latéralement sur un véhicule automobile, ainsi que pour le blocage de ladite porte coulissante dans la position ouverte, ledit dispositif de blocage (1) comprenant une section centrale (3) qui présente pour l'essentiel une surface plane avec un bombement (7), une première section terminale (2) et une deuxième section terminale (4), des ouvertures (5, 6) pour faire passer des moyens de liaison (8, 9, 10) par le biais desquels il peut être monté sur le châssis du véhicule, et ladite première section terminale (2) étant disposée de manière à ne pas être déplaçable, **caractérisé par le fait que** ledit dispositif de blocage (1) est réalisé en matière plastique et que ladite deuxième section terminale (4) est disposée de manière à ne pouvoir être déplacée que dans la direction de roulement de l'élément à galets de sorte que le dispositif de blocage agit comme élément faisant ressort avec une force de ressort par laquelle la porte coulissante est maintenue dans la position ouverte.

2. Dispositif de blocage (1) selon la revendication 1, **caractérisé par le fait que** ladite première section terminale comprend un trou annulaire (5) comme ouverture et ladite deuxième section terminale (4) présente un trou oblong (6) comme ouverture.

3. Dispositif de blocage (1) selon la revendication 1 ou 2, **caractérisé par le fait qu'**il est réalisé en une seule pièce.

4. Dispositif de blocage (1) selon l'une quelconque des revendications précédentes, **caractérisé par le fait qu'**il est réalisé en polyoxyméthylène.

5. Dispositif de blocage (1) selon l'une quelconque des revendications précédentes, **caractérisé par le fait qu'**il peut être monté sur le châssis du véhicule par l'intermédiaire d'un dispositif de montage (8).

6. Dispositif de blocage (1) selon l'une quelconque des revendications précédentes, **caractérisé par le fait que** ladite section centrale (3) est réalisée pour l'essentiel en forme de bande.
